# EUROPÄISCHE PATENTSCHRIFT

(11) **EP 2 607 055 B1**
(45) Veröffentlichungstag und Bekanntmachung des Hinweises auf die Patenterteilung: **13.09.2017**
(21) Anmeldenummer: 12196874.7
(22) Anmeldetag: 13.12.2012
(51) Int. Cl.: B23K 20/10, B26D 7/08, B26D 7/20, F16C 32/04, F16C 32/06, B29C 65/08, B29C 65/74, B29L 7/00, B23Q 3/00

(54) **Amboss zur Ultraschallbearbeitung**
Anvil for ultrasound processing
Enclume pour traitement à ultrasons

(30) Priorität: 21.12.2011 DE 102011121830
(43) Veröffentlichungstag der Anmeldung: 26.06.2013
(73) Patentinhaber: MS Ultraschall Technologie GmbH, 78549 Spaichingen (DE)
(72) Erfinder: Risch, Daniel, 78647 Trossingen (DE); Noder, Elmar, 78662 Bösingen (DE)
(74) Vertreter: Manitz Finsterwald Patentanwälte PartmbB

(56) Entgegenhaltungen:
- EP-A2- 1 849 569
- DE-A1- 4 105 013
- DE-A1- 19 607 401
- DE-C1- 19 837 124
- JP-A- 2004 330 622

## Beschreibung

Die vorliegende Erfindung betrifft einen Amboss zur Ultraschallbearbeitung nach dem Oberbegriff des Anspruchs 1 (vgl. EP 1 849 569 A2), beispielsweise zum Ultraschalltrennen, Ultraschallschweißen oder auch Ultraschalltrennschweißen.

Wenn mit derartigen Bearbeitungsverfahren sehr dünne Materialien, beispielsweise Folien, bearbeitet werden, kann sich das Problem ergeben, dass die von einer Ultraschallvorrichtung, beispielsweise einer Sonotrode, aufgebrachte Ultraschallschwingung überwiegend in den Amboss, d.h. in die Werkstückauflage, jedoch nicht in die Folie eingebracht wird und dass aufgrund einer minimalen Fehlausrichtung der Werkstückauflage eine unregelmäßige Bearbeitung erfolgt.

Es ist deshalb das der Erfindung zugrundeliegende Problem, einen Amboss zur Ultraschallbearbeitung zu schaffen, mit dem auch sehr dünne Materialien ordnungsgemäß bearbeitet werden können.

Die Lösung dieser Aufgabe erfolgt durch die Merkmale des Anspruchs 1.

Versuche haben gezeigt, dass durch die erfindungsgemäße Vorrichtung eine sehr gute Entkopplung zwischen Trägerteil und Auflageteil möglich ist, so dass bei Betreiben der Ultraschallvorrichtung mit mehreren 10 kHz eine Schwingungsamplitude des Trägerteils nicht mehr messbar war. Durch Einsatz des Luftlagers ist der Verschleiß der Lagerteile minimiert und die Entkopplung zwischen Trägerteil und Auflageteil ist optimiert. Gleichzeitig ergibt sich eine selbstausrichtende Lagerung, mit der eine nahezu perfekte Parallelität des Auflageteils relativ zu einem Werkzeug erreicht werden kann, das relativ zu der Werkstückauflage angestellt wird.

Da das Auflageteil und das Trägerteil über zumindest eine Linearführung miteinander verbunden sind, ist eine schwimmende Lagerung der beiden Teile sichergestellt und es sind beide Teile über das Luftlager voneinander getrennt, um eine gute Schwingungsentkopplung zu bewirken. Da das Luftlager einen Permanentmagnet aufweist, ist keine elektrische Versorgung erforderlich.

Für eine verkippungsfreie Führung des Auflageteils an dem Trägerteil sind zwei einzelne Reihen von Permanentmagneten vorgesehen. Außerdem sind Auflageteil und Trägerteil jeweils plattenartig ausgebildet. Auf diese Weise ist eine sehr vorteilhafte Lagerung gewährleistet, die ein Verkippen des Auflageteils gegenüber dem Trägerteil ausschließt. Eine besonders kompakte Anordnung kann dadurch erreicht werden, dass Auflageteil und Trägerteil koplanar angeordnet sind.

Vorteilhafte Ausführungsformen der Erfindung sind in der Beschreibung, der Zeichnung sowie den Unteransprüchen beschrieben.

Nach einer ersten vorteilhaften Ausführungsform ist in dem Auflageteil und in dem Trägerteil jeweils zumindest ein Permanentmagnet derart angeordnet, dass die gleichnamigen Pole der beiden Permanentmagnete einander zugewandt sind. Auf diese Weise wird durch Magnetkraft eine starke abstoßende Wirkung innerhalb des Luftlagers aufrechterhalten. Gleichzeitig ist eine solche Vorrichtung kostengünstig, einfach und schnell herstellbar.

Um insbesondere bei einer großen Breite der zu bearbeitenden Werkstücke und beim Anstellen eines Werkzeugs gegen den Amboss über die gesamte Länge bzw. Fläche der stattfindenden Bearbeitung gleichbleibende Druckverhältnisse zu erhalten, kann es vorteilhaft sein, das Luftlager so auszubilden, dass mehrere örtlich aufgelöste, d.h. diskrete Lagerstellen vorhanden sind, die voneinander räumlich beabstandet sind.

Nach einer weiteren vorteilhaften Ausführungsform kann ein Lagerelement des Luftlagers jeweils in dem Auflageteil und in dem Trägerteil integriert sein. Beispielsweise können Auflageteil und Trägerteil jeweils mit einer Ausnehmung, beispielsweise einer Sackbohrung oder dergleichen, versehen sein, in denen Teile des Luftlagers angeordnet sind. Auf diese Weise ergibt sich ein kompakter und leichtgewichtiger Aufbau.

Es kann vorteilhaftsein, das Auflageteil und/oder das Trägerteil mit zumindest einem Magnetpaket zu versehen. Hierdurch ergibt sich die Möglichkeit, die innerhalb des Luftlagers aufzunehmenden Kräfte zu variieren, indem die Komponenten des Magnetpakets variiert werden.

Nach einer weiteren vorteilhaften Ausführungsform sind Magnete des Luftlagers schwingungsentkoppelt gelagert, d.h. die in dem Auflageteil und dem Trägerteil angeordneten Magnete sind nicht starr mit dem jeweiligen Teil verbunden, sondern weisen eine gedämpfte Lagerung auf. Es hat sich nämlich herausgestellt, dass unter bestimmten Betriebsbedingungen eine Depolarisierung der Magnete auftreten kann, wenn diese längere Zeit Schwingungen im Ultraschallbereich ausgesetzt werden. Erfindungsgemäß können deshalb die verwendeten Magnete beispielsweise in eine Kunststoffmasse eingegossen sein, so dass durch diese Kunststoffmasse eine Schwingungsentkopplung erfolgt.

Nach einer weiteren vorteilhaften Ausführungsform kann das Auflageteil in einer Ausnehmung des Trägerteils geführt sein. Hierdurch ergibt sich eine kompakte Anordnung, bei der auf zusätzliche Führungen zwischen Auflageteil und Trägerteil verzichtet werden kann, da die Ränder der Ausnehmung als Führung herangezogen werden können.

Es kann vorteilhaft sein, wenn die Linearführung zumindest zwei parallele Linear-Kugellager umfasst, da in diesem Fall eine verkippungsfreie Führung des Auflageteils gewährleistet ist.

Nach einer weiteren vorteilhaften Ausführungsform kann das Auflageteil ein verstellbares Ambossrad umfassen. Ein solches verstellbares Ambossrad kann nach einer gewissen Betriebsdauer etwas verdreht werden, wenn sich ein Verschleiß an der Oberfläche des Ambossrades gezeigt hat.

Nach einer weiteren vorteilhaften Ausführungsform kann das Luftlager an dem Trägerteil und an dem Auflageteil eine gleiche Anzahl mehrerer Permanentmagnete umfassen. Auf diese Weise lassen sich einerseits die Abstoßungskräfte zwischen Auflageteil und Trägerteil vergleichmäßigen. Andererseits kann die Abstoßungskraft zwischen Auflageteil und Trägerteil erhöht und auch eingestellt werden, wenn mehrere Paare an Permanentmagneten vorgesehen sind.

Wenn der Permanentmagnet oder die Permanentmagnete so angeordnet werden, dass die Abstoßungskraft parallel zur Ebene der Platten verläuft, kann mit Hilfe von nur zwei seitlichen Linearführungen ein stabil geführtes Luftlager erreicht werden.

Das Auflageteil und/oder das Trägerteil können erfindungsgemäß aus nicht magnetisierbarem Material gebildet sein, beispielsweise aus Aluminium, Titan oder auch Kunststoff. Alternativ ist es auch möglich, das Auflageteil und/oder das Trägerteil als Magnetplatte oder Magnetelement auszubilden.

Nachfolgend wird die vorliegende Erfindung rein beispielhaft anhand vorteilhafter Ausführungsformen und unter Bezugnahme auf die beigefügte Zeichnung beschrieben.
- Fig. 1: zeigt eine Draufsicht einen Amboss zur Ultraschallbearbeitung;
- Fig. 2: zeigt eine teilgeschnittene Seitenansicht des Amboss von Fig. 1;
- Fig. 3: zeigt eine teilgeschnittene Seitenansicht des Amboss von Fig. 1 und 2; und
- Fig. 4: zeigt eine Seitenansicht einer weiteren Ausführungsform eines Ambosses.

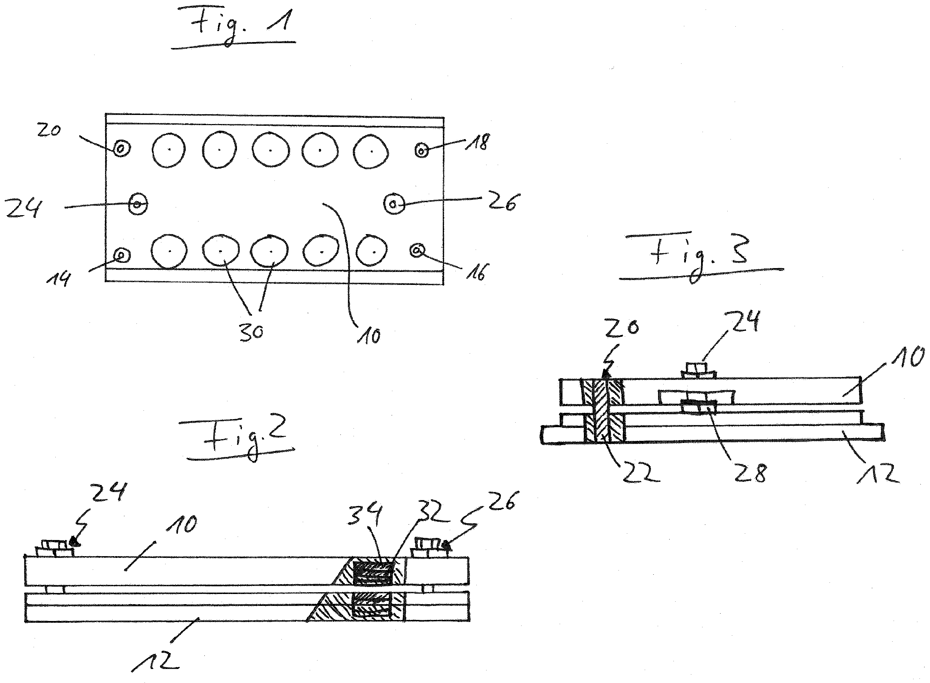

Das in den Fig. 1 - 3 dargestellte Ausführungsbeispiel eines Ambosses zur Ultraschallbearbeitung umfasst ein (in den Fig. 2 und 3) oberes Auflageteil 10 mit einer oberen Auflagefläche, das über ein Luftlager an einem (in Fig. 2 und 3 unteren) Trägerteil 12 schwimmend gelagert ist. Sowohl Auflageteil 10 wie auch Trägerteil 12 sind plattenartig und in Draufsicht im Wesentlichen rechteckig ausgebildet. Die Auflagefläche kann planar oder gekrümmt ausgebildet sein. Um ein Verkanten des Auflageteils 10 gegenüber dem Trägerteil 12 zu verhindern und eine selbstausrichtende Lagerung zu ermöglichen, sind jeweils in den Ecken der Werkstückauflage Linearführungen 14, 16, 18 und 20 angeordnet. Jede Linearführung umfasst einen in das Trägerteil 12 eingeschraubten Bolzen 22, der in seinem oberen Abschnitt mit einem zylindrischen Schaftabschnitt versehen ist, der in eine Bohrung des Auflageteils spielarm eingesetzt ist. Auf diese Weise lässt sich das Auflageteil 10 in einer Richtung parallel zur Achse des Bolzens 22 relativ zu dem Trägerteil 12 verschieben, wobei ein Verdrehen oder ein Verkanten ausgeschlossen ist.

Um das Auflageteil 10 und das Trägerteil 12 unverlierbar miteinander zu verbinden und dabei gleichzeitig eine entkoppelte Bewegung des Auflageteils 10 relativ zu dem Trägerteil 12 zu ermöglichen, sind in der Mitte der Schmalseiten zwei Bolzen 24 und 26 in das Trägerteil 12 eingeschraubt, die durch das Auflageteil 10 hindurchgeführt und in dem Trägerteil 12 mit Muttern 28 gekontert sind.

Das vorstehend beschriebene Luftlager umfasst bei der dargestellten Ausführungsform insgesamt zehn beabstandet voneinander angeordnete Lagerelemente 30, wobei eines der Lagerelemente in dem Längsschnitt der Fig. 2 erkennbar ist. Danach ist jedes Lagerelement 30 durch zwei Magnetpakete 32 und 34 gebildet, wobei jedes Magnetpaket in einer sacklochartigen Ausnehmung des Auflageteils bzw. des Trägerteils angeordnet und dadurch in das jeweilige Teil integriert ist.

Bei dem dargestellten Ausführungsbeispiel besteht jedes Magnetpaket 32, 34 aus insgesamt vier scheibenförmigen Magnetplatten, die in die Ausnehmung in dem Auflageteil 10 bzw. dem Trägerteil 12 eingeklebt oder eingeklemmt oder anderweitig fixiert sind. Hierbei sind die einzelnen Magnetplatten eines Pakets so angeordnet, dass jeweils gegensinnige Pole aufeinander zu liegen kommen. Jedoch sind die beiden Magnetpakete 32 und 34 in dem Auflageteil 10 und dem Trägerteil 12 so angeordnet, dass deren gleichnamige Pole einander zugewandt sind. Mit anderen Worten stoßen sich die beiden Magnetpakete 32 und 34 voneinander ab und bilden dadurch das Luftlagerelement 30.

Wie die Draufsicht der Fig. 1 verdeutlicht, umfasst das Luftlager der dargestellten Ausführungsform zwei parallele Reihen von Luftlagern 30, die jeweils entlang der Längsseiten angeordnet sind und die jeweils fünf Lagerelemente 30 umfassen, wobei jedes Lagerelement ein Magnetpaket 32 und ein Magnetpaket 34 umfasst.

Die geschnittenen Darstellungen der Fig. 2 und 3 lassen erkennen, dass in montiertem Zustand stets ein Luftspalt zwischen dem Auflageteil 10 und dem Trägerteil 12 besteht und dass dieser Luftspalt auch zwischen den jeweiligen Magnetpaketen vorhanden ist. Auf diese Weise ist eine gute selbstausrichtende Lagerung mit hervorragender Entkopplung gewährleistet.

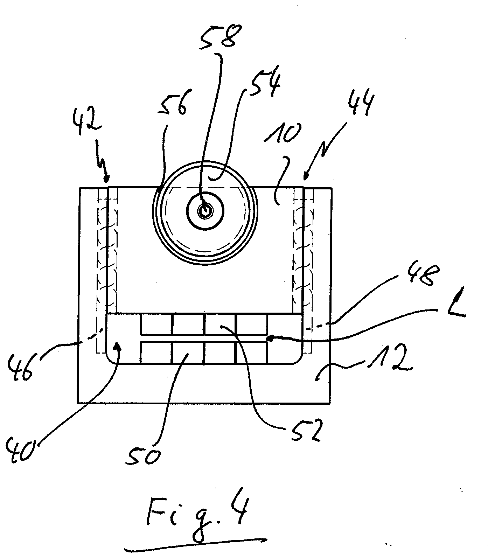

Fig. 4 zeigt eine weitere Ausführungsform eines Ambosses zur Ultraschallbearbeitung, wobei für gleiche Bauteile gleiche Bezugszeichen verwendet sind.

Der in Fig. 4 dargestellte Amboss weist wiederum ein luftgelagertes Auflageteil 10 auf, das über ein Luftlager an einem Trägerteil 12 schwimmend gelagert ist. Sowohl Auflageteil wie auch Trägerteil sind als plattenförmige Bauteile ausgebildet und besitzen in etwa die gleiche Dicke. Zur Führung des Auflageteils 10 in dem Trägerteil 12 ist das Trägerteil 12 mit einer nach oben offenen, U-förmigen Aussparung 40 versehen. Weiterhin sind Auflageteil 10 und Trägerteil 12 über zwei parallele Linearführungen 42 und 44 miteinander verbunden, wobei jede Linearführung 42 und 44 ein Linear-Kugellager umfasst. Zur Führung der einzelnen Kugeln der beiden Kugellager sind jeweils in dem Auflageteil 10 und in dem Trägerteil 12 rinnenartige Nuten 46 und 48 vorgesehen.

Das im Wesentlichen quaderförmige Auflageteil 10 besitzt etwa 2/3 der Höhe des Auflageteils 12, so dass innerhalb der Aussparung 40 zwischen der Unterseite des Auflageteils 10 und der Oberseite des Trägerteils 12 ein Freiraum verbleibt, in dem Lagerelemente des Luftlagers vorgesehen sind. Bei dem dargestellten Ausführungsbeispiel umfassen die Lagerelemente des Luftlagers zwei parallele Reihen von einzelnen Permanentmagneten 50 und 52, die so orientiert sind, dass zwischen den beiden Reihen von Permanentmagneten eine Abstoßungskraft erzeugt wird, um das Luftlager zu bilden. Die Permanentmagnete 50, die an dem Trägerteil 12 befestigt sind und die Permanentmagnete 52, die an dem Auflageteil 10 befestigt sind, sind somit derart angeordnet, dass deren gleichnamige Pole jeweils einander zugewandt sind. Hierdurch ist zwischen den beiden Reihen von Permanentmagneten 50 und 52 ein Luftspalt L gebildet.

Die Permanentmagnete 50 und 52 können an dem Auflageteil 10 und dem Trägerteil 12 auswechselbar befestigt sein, so dass die Abstoßungskraft zwischen diesen beiden Bauteilen eingestellt werden kann. Hierbei können die Permanentmagnete in den Bauteilen versenkt, teilweise integriert, verklebt oder verkeilt sein.

Zur Lagerung eines verstellbaren Ambossrades 54 weist das Auflageteil 10 eine annähernd kreisförmige Aussparung 56 auf, die nach oben und zu einer Seite des Aufnahmeteils 10 hin offen ist. In dieser Aussparung ist das Ambossrad 54 über eine Befestigungsschraube 58 verstellbar befestigt und das Ambossrad 54 ragt mit seinem Außenumfang über das Auflageteil 10 hinaus. Hierdurch kann das Ambossrad als Gegenlager für eine Sonotrode dienen und nach einem festgestellten Verschleiß am Ambossrad etwas verdreht werden.

Bei der in Fig. 4 dargestellten Ausführungsform sind das plattenförmige Auflageteil 10 und das ebenfalls plattenförmige Trägerteil 12 zumindest im Wesentlichen koplanar angeordnet, so dass eine kompakte und symmetrische Konstruktion vorliegt. Die Abstoßungskraft der Permanentmagnete verläuft dabei parallel zur Ebene der plattenförmigen Bauteile 10 und 12, so dass mit nur zwei Linearführungen 42 und 44 eine stabile und kippsichere Führung des Auflageteils 10 geschaffen ist.

## Patentansprüche

1. Amboss zur Ultraschallbearbeitung, der ein luftgelagertes Auflageteil (10) aufweist, das über ein Luftlager an einem Trägerteil (12) schwimmend gelagert ist, wobei Auflageteil (10) und Trägerteil (12) über zumindest eine Linearführung miteinander verbunden sind und zumindest ein Permanentmagnet (32, 34; 50, 52) vorgesehen ist, der zwischen Auflageteil (10) und Trägerteil (12) eine Abstoßungskraft erzeugt, um das Luftlager zu bilden,
**dadurch gekennzeichnet, dass** Auflageteil (10) und Trägerteil (12) jeweils plattenartig ausgebildet sind,
Lagerelemente des Luftlagers zwei parallele Reihen von einzelnen Permanentmagneten (32, 34; 50, 52) umfassen, und dass zumindest eine weitere Linearführung (14 - 20; 42, 44) vorgesehen ist, um eine stabile und kippsichere Führung des plattenartigen Auflageteils (10) zu schaffen.

2. Amboss nach Anspruch 1,
**dadurch gekennzeichnet, dass**
in dem Auflageteil (10) sowie in dem Trägerteil (12) jeweils zumindest ein Permanentmagnet (32, 34; 50, 52) derart angeordnet ist, dass deren gleichnamige Pole einander zugewandt sind.

3. Amboss nach Anspruch 1 oder 2,
**dadurch gekennzeichnet, dass**
Lagerelemente (30) des Luftlagers in das Auflageteil (10) und das Trägerteil (12) integriert sind.

4. Amboss nach zumindest einem der vorstehenden Ansprüche,
**dadurch gekennzeichnet, dass**
Auflageteil (10) und Trägerteil (12) mit zumindest einer Ausnehmung versehen sind, in denen Teile des Luftlagers angeordnet sind.

5. Amboss nach zumindest einem der vorstehenden Ansprüche,
**dadurch gekennzeichnet, dass**
das Auflageteil (10) und/oder das Trägerteil (12) zumindest ein Magnetpaket (32, 34) aufweisen.

6. Amboss nach zumindest einem der vorstehenden Ansprüche,
**dadurch gekennzeichnet, dass**
der zumindest eine Permanentmagnet schwingungsentkoppelt gelagert ist.

7. Amboss nach zumindest einem der vorstehenden Ansprüche,
**dadurch gekennzeichnet, dass**
das Auflageteil (10) in einer Aussparung (40) des Trägerteils (12) geführt ist.

8. Amboss nach zumindest einem der vorstehenden Ansprüche,
**dadurch gekennzeichnet, dass**
die Linearführung (42, 44) zumindest zwei parallele Linear-Kugellager umfasst.

9. Amboss nach zumindest einem der vorstehenden Ansprüche,
**dadurch gekennzeichnet, dass** das Auflageteil (10) ein verstellbares Ambossrad (54) umfasst.

10. Amboss nach zumindest einem der vorstehenden Ansprüche,
**dadurch gekennzeichnet, dass**
das Luftlager an dem Trägerteil (12) und an dem Auflageteil (10) eine gleiche Anzahl mehrerer Permanentmagnete (32, 34; 50, 52) umfasst.

11. Amboss nach Anspruch 10,
**dadurch gekennzeichnet, dass**
eine Reihe von Permanentmagneten (32, 34; 50) an dem Trägerteil (12) und eine Reihe von Permanentmagneten (32, 34; 52) an dem Auflageteil (10) angeordnet ist.

12. Amboss nach zumindest einem der vorstehenden Ansprüche 10 oder 11,
**dadurch gekennzeichnet, dass**
die Abstoßungskraft zwischen Auflageteil (10) und Trägerteil (12) durch Verändern der Anzahl an Permanentmagneten (50, 52) einstellbar ist.

13. Amboss nach Anspruch 1,
**dadurch gekennzeichnet, dass**
Auflageteil (10) und Trägerteil (12) koplanar angeordnet sind.

14. Amboss nach Anspruch 13,
**dadurch gekennzeichnet, dass**
die Abstoßungskraft parallel zur Ebene der Platten (10, 12) verläuft.

## Claims

1. An anvil for ultrasonic machining which has an air-supported support part (10) which is floatingly supported via an air bearing at a carrier part (12), wherein the support part (10) and the carrier part (12) are connected to one another via at least one linear guide and wherein at least one permanent magnet (32, 34; 50, 52) is provided which produces a repulsion force between the support part (10) and the carrier part (12) to form the air bearing,
**characterized in that**
the support part (10) and the carrier part (12) are each configured in the manner of plates;
**in that** bearing elements of the air bearing comprise two parallel rows of individual permanent magnets (32, 34; 50, 52); and **in that** at least one further linear guide (14 - 20; 42, 44) is provided in order to provide a stable and tilt-safe guidance of the plate-like support part (10).

2. An anvil in accordance with claim 1,
**characterized in that**
at least one permanent magnet (32, 34; 50, 52) is respectively arranged in the support part (10) as well as in the carrier part (12) such that their like poles face one another.

3. An anvil in accordance with claim 1 or claim 2,
**characterized in that**
bearing elements (30) of the air bearing are integrated into the support part (10) and the carrier part (12).

4. An anvil in accordance with at least one of the preceding claims,
**characterized in that**
the support part (10) and the carrier part (12) are provided with at least one cut-out in which parts of the air bearing are arranged.

5. An anvil in accordance with at least one of the preceding claims,
**characterized in that**
the support part (10) and/or the carrier part (12) has/have at least one magnet package (32, 34).

6. An anvil in accordance with at least one of the preceding claims,
**characterized in that**
the at least one permanent magnet is supported in a vibration-decoupled manner.

7. An anvil in accordance with at least one of the preceding claims,
**characterized in that**
the support part (10) is guided in a recess (40) of the carrier part (12).

8. An anvil in accordance with at least one of the preceding claims,
**characterized in that**
the linear guide (42, 44) comprises at least two parallel linear ball bearings.

9. An anvil in accordance with at least one of the preceding claims,
**characterized in that**
the support part (10) comprises an adjustable anvil wheel (54).

10. An anvil in accordance with at least one of the preceding claims,
**characterized in that**
the air bearing comprises an equal number of a plurality of permanent magnets (32, 34; 50, 52) at the carrier part (12) and at the support part (10).

11. An anvil in accordance with claim 10,
**characterized in that**
a row of permanent magnets (32, 34; 50) is arranged at the carrier part (12) and a row of permanent magnets (32, 34; 52) is arranged at the support part (10).

12. An anvil in accordance with at least one of the preceding claims 10 or 11,
**characterized in that**
the repulsion force between the support part (10) and the carrier part (12) can be set by varying the number of permanent magnets (50, 52).

13. An anvil in accordance with claim 1,
**characterized in that**
the support part (10) and the carrier part (12) are arranged in a coplanar manner.

14. An anvil in accordance with claim 13,
**characterized in that**
the repulsion force extends in parallel with the plane of the plates (10, 12).

## Revendications

1. Enclume pour traitement à ultrasons, qui comprend une partie d'appui (10) montée sur palier à air, qui est montée en flottement sur une partie de support (12) au moyen d'un palier à air,
dans laquelle la partie d'appui (10) et la partie de support (12) sont reliées l'une à l'autre par au moins un guidage linéaire, et il est prévu au moins un aimant permanent (32, 34 ; 50, 52) qui génère une force de répulsion entre la partie d'appui (10) et la partie de support (12), afin de constituer le palier à air,
**caractérisée en ce que**
la partie d'appui (10) et la partie de support (12) sont réalisées chacune en forme de plaque,
des éléments de palier du palier à air comprennent deux rangées parallèles d'aimants permanents individuels (32, 34 ; 50, 52), et **en ce que**
il est prévu au moins un autre guidage linéaire (14 - 20 ; 42, 44) pour réaliser un guidage stable anti-basculement de la partie d'appui (10) en forme de plaque.

2. Enclume selon la revendication 1,
**caractérisée en ce que**
au moins un aimant permanent respectif (32, 34 ; 50, 52) est agencé dans la partie d'appui (10) ainsi que dans la partie de support (12), de telle sorte que leurs pôles de même polarité sont tournés l'un vers l'autre.

3. Enclume selon la revendication 1 ou 2,
**caractérisée en ce que**
des éléments de palier (30) du palier à air sont intégrés dans la partie d'appui (10) et dans la partie de support (12).

4. Enclume selon l'une au moins des revendications précédentes,
**caractérisée en ce que**
la partie d'appui (10) et la partie de support (12) sont pourvues d'au moins un évidement dans lequel sont agencés des éléments du palier à air.

5. Enclume selon l'une au moins des revendications précédentes,
**caractérisée en ce que**
la partie d'appui (10) et/ou la partie de support (12) comprennent au moins un ensemble d'aimants (32, 34).

6. Enclume selon l'une au moins des revendications précédentes,
**caractérisée en ce que**
ledit au moins un aimant permanent est monté en étant découplé vis-à-vis des vibrations.

7. Enclume selon l'une au moins des revendications précédentes,
**caractérisée en ce que**
la partie d'appui (10) est guidée dans une échancrure (40) de la partie de support (12).

8. Enclume selon l'une au moins des revendications précédentes,
**caractérisée en ce que**
le guidage linéaire (42, 44) comprend au moins deux roulements à billes linéaires parallèles.

9. Enclume selon l'une au moins des revendications précédentes,
**caractérisée en ce que**
la partie d'appui (10) comprend une roue-enclume réglable (54).

10. Enclume selon l'une au moins des revendications précédentes,
**caractérisée en ce que**
le palier à air comprend le même nombre de plusieurs aimants permanents (32, 34 ; 50, 52) sur la partie de support (12) et sur la partie d'appui (10).

11. Enclume selon la revendication 10,
**caractérisée en ce que**
une rangée d'aimants permanents (32, 34 ; 50) est agencée sur la partie de support (12) et une rangée d'aimants permanents (32, 34 ; 52) est agencée sur la partie d'appui (10).

12. Enclume selon l'une au moins des revendications précédentes 10 ou 11,
**caractérisée en ce que**
la force de répulsion entre la partie d'appui (10) et la partie de support (12) est réglable par variation du nombre d'aimants permanents (50, 52).

13. Enclume selon la revendication 1,
**caractérisée en ce que**
la partie d'appui (10) et la partie de support (12) sont agencées de façon coplanaire.

14. Enclume selon la revendication 13,
**caractérisée en ce que**
la force de répulsion s'étend parallèlement au plan des plaques (10, 12).
